# EUROPEAN PATENT SPECIFICATION

(11) **EP 4 441 103 B1**
(45) Date of publication and mention of the grant of the patent: **31.12.2025**
(21) Application number: 22823364.9
(22) Date of filing: 29.11.2022
(51) Int. Cl.: C08F 2/01, C08F 10/00, C08F 210/06, C08F 2/00, C08L 23/14

(54) **SAMPLING POLYOLEFIN INTERMEDIATES METHOD**
VERFAHREN ZUR PROBENAHME VON POLYOLEFINZWISCHENPRODUKTEN
PROCÉDÉ D'ÉCHANTILLONNAGE D'INTERMÉDIAIRES DE POLYOLÉFINE

(30) Priority: 30.11.2021 EP 21211533
(43) Date of publication of application: 09.10.2024
(73) Proprietor: Borealis GmbH, 1020 Vienna (AT)
(72) Inventor: BERGSTRA, Michiel, 3583 Beringen (BE); CASTRO, Pascal, 06101 Porvoo (FI); LESKINEN, Pauli, 06101 Porvoo (FI); ELOVAINIO, Erno, 06101 Porvoo (FI); KIVELÄ, Jouni, 06101 Porvoo (FI); ZITTING, Samuli, 06850 Kulloo (FI)
(74) Representative: Maiwald GmbH
(86) International application number: PCT/EP2022/083593
(87) International publication number: WO 2023/099441

(56) References cited:
- WO-A1-2005/080441
- WO-A1-94/27134
- US-A1- 2012 053 304

## Description

### Field of the Invention

The present invention relates to a process of sampling polyolefin intermediates from a reactor sequence configured in series and to the deactivation of catalyst.

### Background

US3,556,730 discloses deactivation of reactor material upstream of a flash unit by alcohols and ketones. EP2336200 describes a flake sampling configuration without catalyst deactivation and use of a filter. US10.858.458 discloses the use of alcohol for catalyst deactivation in a sample system connected to the final product discharge conduit being connected to a gas phase reactor. US2016347887A1 is concerned with a method and system for measurement of a property of a liquid in a loop slurry polymerization reactor. The method and the system are not concerned with analysis of intermediate polymer as such. WO9635936 describes that polymer, diluents and monomers can be taken out from a loop reactor either continuously or periodically via a discharge valve and can be introduced into a separator, where the polymer is separated by lowering pressure without catalyst deactivation (questionable safety; no flushing with N2). The problem remains to provide a sampling method enabling a reliable intermediate sample which can be analyzed for numerous characterizing properties, whereby the sampling method is safe for operator and environment, not causing corrosion in the sampling equipment and connecting piping, and does not result in the need for further workup or the provision of easily flammable and/or potentially explosive species.

### Summary of the Invention

The present invention insofar provides a
a process for providing an intermediate polyolefin polymer sample from a first polyolefin polymerization reactor (1) coupled in series with a second polyolefin polymerization reactor (2) and being connected by a connecting conduit (11), the first polyolefin polymerization reactor being operated below 100°C,
the process, comprising the steps of
   a) feeding a part of the reaction mixture including intermediate polyolefin polymer, unreacted monomers and optionally unreacted comonomers, catalyst, aluminum containing cocatalyst and optionally external donors from the first polyolefin polymerization reactor (1) or from the connecting conduit (11) to a sampling conduit, whereby
      - the sampling conduit (12) is defined by an inlet valve (21) and an outlet valve (22) and whereby
      - the sampling conduit (12) is connected via a feed line (14) to a sampling pot (5);
         by opening the inlet valve (21) and keeping the outlet valve (22) closed; and then closing the inlet valve; and
   b) opening the outlet valve thereby feeding the reaction mixture into the sampling pot via feed line (14);
   c) flashing and degassing the reaction mixture in the absence of catalyst poisons;
      optionally flushing by nitrogen in the absence of catalyst poisons;
   d) thereafter introducing a non-combustible deactivation agent into the sampling pot for catalyst deactivation under conditions such that the non-combustible deactivation agent is in vapor state and whereby the non-combustible deactivation agent is selected from carbon dioxide or a mixture of carbon dioxide and water;
   e) optionally feeding unreacted monomers, optionally present unreacted comonomers, catalyst decomposition products, aluminum containing cocatalyst and optionally present external donors into reprocessing and/or removal facilities and
   f) providing an intermediate polyolefin polymer sample in the sampling pot (5).

Polymerization reactor means any vessel or pipe suitable for polymerizing polyolefins. It goes without saying that so-called prepolymerization vessels are polymerization reactors. Intermediate polyolefin polymer sample means an intermediate product as obtained from the first polyolefin polymerization reactor. It should be understood that the process is not limited to a two-reactor setup. For example, if four reactors are used and the third reactor is a loop reactor, the process can be applied without adaptation. In such case, the "third reactor" simply equals the first polyolefin polymerization reactor.

"Operated below 100 °C" indicates that the first polyolefin polymerization reactor is not operated under solution polymerization conditions.

"Carbon dioxide in vapor state" means that carbon dioxide is present as a gas, i.e. temperature and pressure are adequately adjusted.

"flashing and degassing the reaction mixture in the absence of catalyst poisons" means that the flashing and degassing is done by not introducing catalyst poisons such as water, steam, alcohol, air, ether, carbon monoxide. However, it should be understood that the presence of residual amount of e.g. air may be unavoidable in the sampling pot. Residual amounts may be equated with below 5 ppm. The same holds for the optional flushing step with nitrogen in the absence of catalyst poisons.

"Thereafter introducing a non-combustible deactivation agent" in step d) refers to the time of introducing a non-combustible deactivation agent.

The process according to the present invention bears several advantages. Carbon dioxide leads to good deactivation and the vapor form thereof enables diffusion within the polymer pores, i.e. faster than using liquids. Moreover, carbon dioxide can be removed easily. Carbon dioxide further avoids toxicity problems such as occurring when using carbon monoxide or corrosion problems such as when using water, ammonia, sulphuric acid and the like. Carbon dioxide also allows avoiding liquids such as commonly used silicon oils, which are frequently difficult to remove and may falsify analytical results. The process according to the present invention is further very safe and effective. Carbon dioxide will not form an explosive mixture with hydrocarbons, like when using air as a deactivation agent. Also carbon dioxide will not cause a fire hazard when released into the atmosphere. Most important, the process allows a precise analytical analysis without misleading further and side reactions due to work-up of the intermediate. This allows steering and controlling the subsequent reactor in a straightforward way.

The non-combustible deactivation agent according to the process of the present invention is selected from the group of water, carbon dioxide and mixtures thereof, preferably the non-combustible deactivation agent is CO₂.

In the process according to the present invention, the first reactor is preferably a loop reactor, optionally proceeded by another loop reactor and or a pre-reactor. The second reactor preferably can be a gas phase polymerization reactor.

In a further aspect of the inventive process, at least one filter for preventing polymer power discharge is preferably applied. This can be achieved by a filter positioned within the sampling pot and/or by one or more separate filter(s). In a preferred embodiment of the present invention the flashed gases are preferably filtered in order not to lose any polymer material such as polymer fines.

The sampling pot is preferably subjected to positive nitrogen pressure before feeding the reaction mixture. This avoids contact with air and improves safety.

In another preferred aspect of the process according to present invention, the sampling pot is heated for flashing off potentially present liquids. For example, liquid propylene may be driven out of the reaction mixture.

It is also possible that flashing and degassing of the reaction mixture by nitrogen in the absence of catalyst poisons is effected in a separated flash tank upstream of the sampling pot, whereby upon opening of the outlet valve (22), the reaction mixture is fed into said separated flash tank. In such embodiment, a flash tank and a sampling pot are present as two different apparatus. This embodiment can be combined with all preferred aspects as described herein.

Preferably the hydrocarbons are recovered by a hydrocarbon recovery unit (45) comprising a compression stage. As a safety measure a flare may also be present.

In yet a further and preferred aspect of the process according to the present invention, the vapor phase of the intermediate polyolefin polymer sample is measured for the presence of hydrocarbons. Independent thereof, oxygen is preferably measured. This is typically done by Gas Chromatography and/or Mass Spectroscopy. The skilled person is also aware of using pressure monitoring for sequence control.

Usually, in the process according to the present invention, the intermediate polyolefin polymer sample is preferably fed from the sampling pot to collecting facilities. This means that the intermediate polyolefin polymer sample is preferably not recycled back to the reactors but merely used for analytical purposes.

It is also preferred that the intermediate polyolefin polymer sample is fed from the sampling pot to collecting facilities after measuring the vapor phase of the intermediate polyolefin polymer sample for the presence of hydrocarbons.

In another independently preferred aspect of the process according to present invention, temperature measurement is used for detecting liquid hydrocarbons. If hydrocarbons are present at flashing and low pressure in the sampling vessel the boiling point of the liquid hydrocarbon will be detected in the temperature measurement, typically lower than the ambient or normal vessel temperature.

The intermediate polyolefin polymer according to present invention is preferably a polypropylene homo- or polypropylene copolymer. In another embodiment the intermediate polyolefin polymer is a polyethylene polymer.

In a first embodiment of the process according to the present invention, the intermediate polyolefin polymer is a polypropylene homo- or polypropylene copolymer, preferably the polymer produced in the first reactor is a homopolymer and the polymer produced in the second reactor is also a homopolymer.

In a second embodiment of the process according to the present invention, the polymer produced in the first reactor is a random ethylene propylene copolymer and the polymer produced in the second reactor is also a random ethylene propylene copolymer.

In a third embodiment, the polymer produced in the second reactor according to the first or the second embodiment is subjected to a third reactor to obtain a heterophasic copolymer.

As stated above, in the present invention the deactivation agent is preferably a non-combustible agent selected from the group of water, CO₂ and mixtures thereof. Water and mixtures of water with CO₂ are less preferred. Moreover, in the process according to the present invention ketones, alcohols, oxygen, carbon monoxide and/or water are preferably not introduced into the sampling pot.

Since the intermediate polyolefin polymer sample is representative for the intermediate, i.e. has not been changed due to further reaction and/or work-up, analytical measurements are preferably carried out such as measurement of melt flow rate, determination of rheology (e.g. polydispersity index, creep analysis, shear properties, and the like); density determination (in the field of polyethylenes); crystallinity measurements such as wide-angle X-ray scattering (WAXS) and differential scanning calorimetry (DSC), determination of modulus (tensile testing, flexural modulus); determination of comonomer content (by NMR or IR) and distribution thereof (coupled methods including TREF, CRYSTAF, CFC and others); measurement of Crystex properties; determination of xylene solubles; and GPC measurement (Mw, Mn, Mz, and others).

Generally and preferably in the process as described herein, the intermediate polyolefin polymer sample is analyzed for one or more of the following
a) melt flow rate;
b) rheological properties;
c) density;
d) crystallinity;
e) modulus;
f) comonomer content;
g) comonomer distribution;
h) Crystex properties;
i) xylene solubles;
j) GPC properties;
k) melting and crystallization temperatures.

It is particularly preferred that the analytical data as obtained is used for adapting and steering the process in the first reactor or first and/or upstream reactors.

Particularly and preferably,
(aa) the analytical data as obtained in one or more of a) to k) is used for adapting and steering the process in the first reactor;
   and/or
(bb) the analytical data as obtained in one or more of a) to k) is used for adapting and steering the process in a reactor upstream of the first reactor.

The reaction mixture of the first reactor according to the present invention is preferably not a reaction mixture of a solution polymerization. A skilled person anyway will understand that a loop reactor operated below 100°C conventionally excludes such option as the solubility of polyolefins usually requires significantly higher temperatures. Preferably the first reactor is operated as a bulk polymerization.

In another preferred aspect, the catalyst of the process according to the present invention is a Ziegler Natta catalyst.

### Detailed Description

In the following, the process shall be described in further detail with respect to the figures.
- Figure 1:: 1^{st} embodiment (internal filter).
- Figure 2:: 2^{nd} embodiment (external filters)
- Figure 3:: 3^{rd} embodiment (flash and sampling pot)

### Reference number lists:

- 1: first polyolefin polymerization reactor being a loop reactor
- 2: second polyolefin polymerization reactor (loop reactor or gas phase reactor)
- 3: sample unit
- 4: filter
- 5: sampling pot
- 11: connecting conduit between first polyolefin polymerization reactor and second polyolefin polymerization reactor
- 12: sampling conduit
- 13: flush for the flush medium (in propylene polymerization = propylene; in ethylene polymerization = propane or isobutane or, generally whatever diluent used in the continuous phase of the first polymerization reactor)
- 14: feed line
- 15: vent line
- 16: nitrogen line
- 17: CO₂ feed line

- 18: sample collection line
- 21: inlet valve
- 22: outlet valve of sampling conduit
- 23: degassing valve
- 24: nitrogen supply valve for blowback of the filter
- 25: depressurization valve
- 26: nitrogen supply valve for flushing
- 27: CO₂ supply valve
- 28: polymer sample outtake valve
- 31: analyzer for hydrocarbons, hydrogen and oxygen concentration / sample point for analysis of vapor in sampling pot
- 32: thermometer probe(s) and control
- 33: pressure measurement

### Figure 2:

- 6: filter
- 7: optional B filter
- 34, 36: valves (inlet to filters))
- 35, 37: valves (outlet, from filters)

### Figure 3

- 8: flash unit
- 9: flash vessel
- 10: filter of flash unit
- 34: means for pressure measurement
- 40: transfer valve from flash vessel to sample pot
- 41: degassing valve from flash vessel
- 42: nitrogen flush valve for transfer
- 43: blowback supply valve
- 44: feed to flash vessel
- 45: connection to flare or gas recovery compressor / hydrocarbon recovery unit
- 46: gas supply for blowback of flash filter

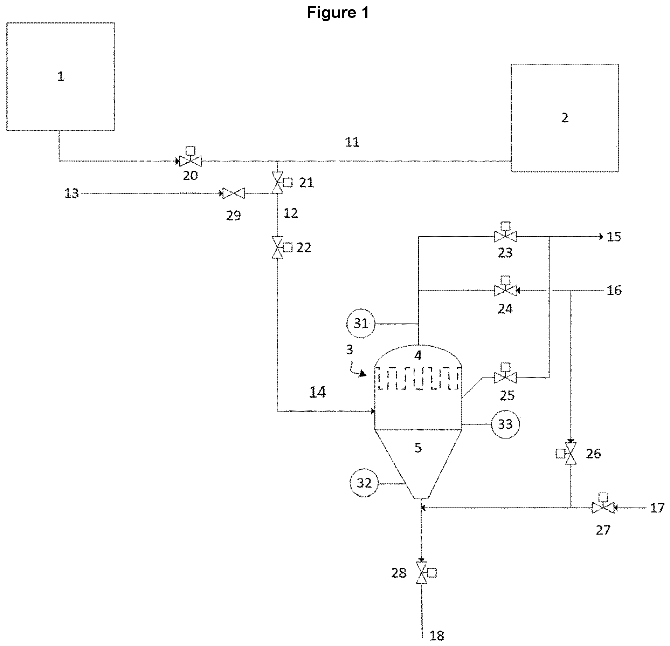

Reaction mixture is withdrawn from the first polyolefin polymerization reactor (1) which is a loop reactor, and which is coupled in series with a second polyolefin polymerization reactor (2), whereby the two reactor are connected by a connecting conduit (11). The withdrawal can take place directly from the loop reactor or as shown in figure 1 from the connecting conduit.

The reaction mixture is fed to sampling conduit (12), which is defined by inlet valve (21) and outlet valve (22).

The sampling conduit may be connected to a flush for the flush medium, i.e. diluent used in the continuous phase of the first polymerization reactor, e.g. propylene in case of polypropylene or for example propane or isobutane in the case of polyethylene production. Such flush may also be used for cleaning the sampling conduit. When the polyolefin is not a polypropylene another adequate liquid/condensed vapor may be used for the purpose.

The sampled reaction mixture can enter the sampling pot via feed line (14). The sampling pot can be equipped with a filter (4) as known in the art. The sampling pot can be equipped with a sample point/analyzer for hydrocarbons, hydrogen and oxygen concentration (31) for analyzing vapor in the sampling pot. Usually, a sample point will be located at the top part of the sampling pot and preferably connected to a vent line (15) and a nitrogen line (16) which lines conventionally will be configured as shut-off lines by means of valves.

The sampling pot is preferably equipped with another conduit and depressurization valve (25) for venting. Temperature (thermometer probe(s), control) and pressure measurement means (32, 33) preferably may be foreseen.

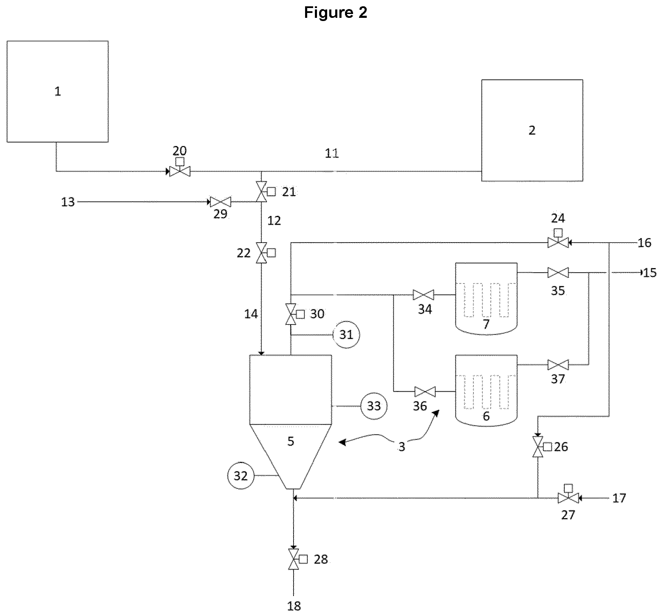

Figure 2 shows a second embodiment, whereby two filters (5, 6) are present as separate operation units. The parallel filter (6) can be installed to improve operability.

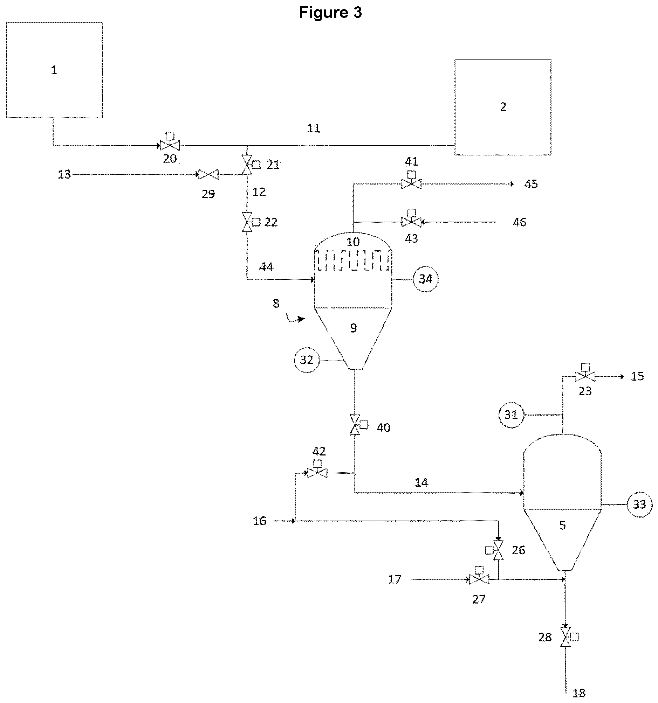

Figure 3 shows an embodiment, with an additional sample flash tank in addition to the sample pot. Main advantage is that the flashed hydrocarbons can be fed alternatively to a hydrocarbon recovery section comprising a compression stage such as a gas recovery compressor. In this preferred alternative the gas used for blowback of the flash filter is the component in vapor state which is in liquid state the continuous phase in the first polyolefin polymerization reactor. For example, in the case of polypropylene the blowback gas can be evaporated propylene at elevated pressure and in the case of polyethylene the blowback gas can be the diluent in vapor state at elevated pressure e.g. propane, isobutane.

### Experimental Section

The following Examples are included to demonstrate certain aspects and embodiments of the invention as described in the claims. It should be appreciated by those of skill in the art, however, that the following description is illustrative only and should not be taken in any way as a restriction of the invention.

### Test Methods

**a) MFR:** melt flow rates were measured with a load of 2.16 kg (MFR₂), 5.0 kg (MFR₅) or 21.6 kg (MFR₂₁) at 230°C as indicated. The melt flow rate is that quantity of polymer in grams which the test apparatus standardized to ISO 1133 extrudes within 10 minutes at a temperature of 230°C (for polypropylene) or 190°C (for polyethylene) under a load of 2.16 kg, 5.0 kg or 21.6 kg.
**b) DSC analysis, melting temperature (Tₘ) and heat of fusion (H_{f}), crystallization temperature (T_{c}) and melt enthalpy (Hm):**
   measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. The crystallization temperature (T_{c}) is determined from the cooling step, while melting temperature (Tₘ) and melting enthalpy (Hₘ) are determined from the second heating step. The crystallinity is calculated from the melting enthalpy by assuming an Hm-value of 209 J/g for a fully crystalline polypropylene (see Brandrup, J., Immergut, E. H., Eds. Polymer Handbook, 3rd ed. Wiley, New York, 1989; Chapter 3).
**c) Comonomer content**
   Quantitative nuclear-magnetic resonance (NMR) spectroscopy was used to quantify the ethylene content of the polymers.
   Quantitative ¹³C{¹H} NMR spectra were recorded in the solution-state using a Bruker Avance III 400 NMR spectrometer operating at 400.15 and 100.62 MHz for ¹H and ¹³C respectively. All spectra were recorded using a ¹³C optimized 10 mm extended temperature probe head at 125°C using nitrogen gas for all pneumatics. Approximately 200 mg of material was dissolved in 3 ml of *1,2*-tetrachloroethane-*d*₂ (TCE-*d*₂) along with chromium (III) acetylacetonate (Cr(acac)₃) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative ¹³C{¹H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950). The comonomer fraction was quantified using the method of Wang et. al. (Wang, W-J., Zhu, S., Macromolecules 33 (2000), 1157) through integration of multiple signals across the whole spectral region in the ¹³C{¹H} spectra. This method was chosen for its robust nature and ability to account for the presence of regio-defects when needed.

### Experiments

### Catalyst

The catalyst used in the examples was a-Ziegler-Natta-catalyst as described in EP 591 224 triethylaluminium (TEAL) as cocatalyst and dicyclo pentyl dimethoxy silane (D-donor) as external donor being commercially available as Grace Polytrack 8502. Using a prepolymerization reactor - loop reactor - gas phase reactor combination polypropylenes were produced.

| | Examples | Ex. 1 | Ex. 2 |
|---|---|---|---|
| Cat + Prepol | catalyst | Grace Polytrack 8502 | Grace Polytrack 8502 |
| | Ext. donor | D | D |
| | Cocatalyst feed g/t C3 | 140 | 140 |
| | donor feed (g/t propylene) | 26 | 26 |
| | Temperature (°C) | 26.1 | 26.1 |
| | | | |
| Loop | Temperature (°C) | 70 | 70 |
| | Pressure (kPa) | 3800 | 3800 |
| | H2/C3 ratio (mol/kmol) | 0.35 | 0.40 |
| | split | 39.9 | 36.2 |
| | MFR2 (g/10min) | 0.43 | 0.41 |
| | XS | 5.7 | 5.6 |
| | C2 content (wt.-%)* | 3.15 | 3 |
| | | | |
| GPR1 | Temperature (°C) | 85 | 85 |
| | Pressure (kPa) | 2100 | 2100 |
| | H2/C3 ratio (mol/kmol) | 0.44 | 0.43 |
| | split | 60 | 64 |
| | MFR2 (g/10min) | 0.23 | 0.29 |
| | XS | 5.8 | 5.7 |
| | C2 content (wt.-%)** | 3.6 | 3.5 |
| | | | |
| Final Product | MFR2 (g/10min) | 0.13 | 0.10 |
| | MFR5 (g/10min) | 0.22 | 0.19 |
| | Tm (°C) | 145.5 | 146.3 |
| | Tcr (°C) | 114.0 | 112.7 |

| | | | |
|---|---|---|---|
| * as analyzed on the material from the loop reactor ** as analyzed on the material from GPR1. | | | |

The conduit between the loop reactor and the gas phase reactor was equipped with the sampling means as shown in figure 1. Several modes of operation were tested. The variations of Ex 1 and Ex. 2 as regards the intermediated could be analyzed. It turned out, less variation of the final products can be achieved by the sampling means according to the invention.

## Claims

1. A process for providing an intermediate polyolefin polymer sample from a first polyolefin polymerization reactor (1) coupled in series with a second polyolefin polymerization reactor (2) and being connected by a connecting conduit (11), the first polyolefin polymerization reactor being operated below 100°C,
the process, comprising the steps of
a) feeding a part of the reaction mixture including intermediate polyolefin polymer, unreacted monomers and optionally unreacted comonomers, catalyst, aluminum containing cocatalyst and optionally external donors from the first polyolefin polymerization reactor (1) or from the connecting conduit (11) to a sampling conduit , whereby
- the sampling conduit (12) is defined by an inlet valve (21) and an outlet valve (22) and whereby
- the sampling conduit (12) is connected via a feed line (14) to a sampling pot (5); by opening the inlet valve (21) and keeping the outlet valve (22) closed; and then closing the inlet valve; and
b) opening the outlet valve thereby feeding the reaction mixture into the sampling pot via feed line (14);
c) flashing and degassing the reaction mixture in the absence of catalyst poisons;
optionally flushing by nitrogen in the absence of catalyst poisons;
d) thereafter introducing a non-combustible deactivation agent into the sampling pot for catalyst deactivation under conditions such that the non-combustible deactivation agent is in vapor state and whereby the non-combustible deactivation agent is selected from carbon dioxide or a mixture of carbon dioxide and water;
e) optionally feeding unreacted monomers, optionally present unreacted comonomers, catalyst decomposition products, aluminum containing cocatalyst and optionally present external donors into reprocessing and/or removal facilities and
f) providing an intermediate polyolefin polymer sample in the sampling pot (5).

2. The process according to claim 1 whereby the non-combustible deactivation agent is carbon dioxide.

3. The process according to claim 1 or 2, wherein the first reactor is a loop reactor, optionally proceeded by another loop reactor and or a pre-reactor.

4. The process according to any one of the preceding claims, wherein the second reactor is a gas phase polymerization reactor.

5. The process according any one of the preceding claims, whereby a filter (4) for preventing polymer powder discharge is present; and/or whereby separate filters (6,7) outside the sampling pot are present.

6. The process according any one of the preceding claims, whereby the sampling pot is subjected to positive nitrogen pressure before feeding the reaction mixture.

7. The process according to any one of the preceding claims, whereby the sampling pot is heated for flashing off potentially present liquids.

8. The process according to any one of the preceding claims, whereby flashing and degassing the reaction mixture by nitrogen in the absence of catalyst poisons is effected in a separated flash unit (8) upstream of the sampling pot, whereby upon opening of the outlet valve (22), the reaction mixture is fed into said separated flash unit.

9. The process according to any one of the preceding claims, whereby the vapor phase of the intermediate polyolefin polymer sample is measured for the presence of hydrocarbons.

10. The process according to any one of the preceding claims, whereby temperature measurement is used for detecting liquid hydrocarbons.

11. The process according to any one of the preceding claims, whereby the intermediate polyolefin polymer is a polypropylene homo- or polypropylene copolymer, preferably whereby the polymer produced in the first reactor is a homopolymer and the polymer produced in the second reactor is also a homopolymer,
or alternatively,
whereby the polymer produced in the first reactor is a random ethylene propylene copolymer and the polymer produced in the second reactor is also a random ethylene propylene copolymer; and
whereby optionally,
the polymer produced in the second reactor is subjected to a third reactor to obtain a heterophasic copolymer.

12. The process according any one of the preceding claims, whereby ketones, alcohols, oxygen, carbon monoxide and/or water are not introduced into the sampling pot.

13. The process according any one of the preceding claims, whereby the intermediate polyolefin polymer sample is analyzed for one or more of the following
a) melt flow rate;
b) rheological properties;
c) density;
d) crystallinity;
e) modulus;
f) comonomer content;
g) comonomer distribution;
h) Crystex properties;
i) xylene solubles;
j) GPC properties;
k) melting and crystallization temperatures;
and whereby
(aa) optionally the analytical data as obtained in one or more of a) to k) is used for adapting and steering the process in the first reactor; and/or
(bb) optionally the analytical data as obtained in one or more of a) to k) is used for adapting and steering the process in a reactor upstream of the first reactor.

14. The process according to any one of the preceding claims, whereby the reaction mixture of the first reactor is not a reaction mixture of a solution polymerization.

15. The process according the any one of the preceding claims, whereby the catalyst is a Ziegler Natta catalyst.

## Patentansprüche

1. Verfahren zur Bereitstellung einer Polyolefinpolymer-Zwischenproduktprobe aus einem ersten Polyolefin-Polymerisationsreaktor (1), der mit einem zweiten Polyolefin-Polymerisationsreaktor (2) in Reihe geschaltet und über eine Verbindungsleitung (11) verbunden ist, wobei der erste Polyolefin-Polymerisationsreaktor bei Temperaturen unter 100 °C betrieben wird,
das Verfahren umfassend die folgenden Schritte:
a) Zuführen eines Teils des Reaktionsgemisches, enthaltend das Polyolefinpolymer-Zwischenprodukt, nicht umgesetzte Monomere und optional nicht umgesetzte Comonomere, einen Katalysator, einen aluminiumhaltigen Cokatalysator und optional externe Donatoren, aus dem ersten Polyolefin-Polymerisationsreaktor (1) oder aus der Verbindungsleitung (11) zu einer Probenahmeleitung, wobei
- die Probenahmeleitung (12) durch ein Einlassventil (21) und ein Auslassventil (22) definiert ist und wobei
- die Probenahmeleitung (12) über eine Zuleitung (14) mit einem Probenahmegefäß (5) verbunden ist,
durch Öffnen des Einlassventils (21) und Geschlossenhalten des Auslassventils (22) und dann Schließen des Einlassventils und
b) Öffnen des Auslassventils, wodurch das Reaktionsgemisch über die Zuleitung (14) in den Probenahmebehälter geleitet wird,
c) Entspannen und Entgasen des Reaktionsgemischs in Abwesenheit von Katalysatorgiften,
optional Spülen mit Stickstoff in Abwesenheit von Katalysatorgiften,
d) danach Einbringen eines nicht brennbaren Deaktivierungsmittels in den Probenahmebehälter zur Katalysatordeaktivierung unter Bedingungen, bei denen das nicht brennbare Deaktivierungsmittel im Dampfzustand vorliegt, und wobei das nicht brennbare Deaktivierungsmittel aus Kohlendioxid oder einer Mischung aus Kohlendioxid und Wasser ausgewählt ist,
e) optional Einleiten nicht umgesetzter Monomere, optional vorhandener nicht umgesetzter Comonomere, Katalysatorzersetzungsprodukte, aluminiumhaltiger Cokatalysatoren und optional vorhandener externer Donatoren in Wiederaufbereitungs- und/oder Entsorgungsanlagen und
f) Bereitstellen einer Polyolefin-Polymer-Zwischenproduktprobe im Probenahmebehälter (5)

2. Verfahren nach Anspruch 1, wobei das nicht brennbare Deaktivierungsmittel Kohlendioxid ist.

3. Verfahren nach Anspruch 1 oder 2, wobei der erste Reaktor ein Schlaufenreaktor ist, dem optional ein weiterer Schlaufenreaktor und/oder ein Vorreaktor vorgeschaltet ist.

4. Verfahren nach einem der vorhergehenden Ansprüche, wobei der zweite Reaktor ein Gasphasen-Polymerisationsreaktor ist.

5. Verfahren nach einem der vorhergehenden Ansprüche, wobei ein Filter (4) zur Verhinderung des Austrags von Polymerpulver vorhanden ist und/oder wobei separate Filter (6, 7) außerhalb des Probenahmebehälters vorhanden sind.

6. Verfahren nach einem der vorhergehenden Ansprüche, wobei der Probenahmebehälter vor der Zufuhr des Reaktionsgemisches mit Stickstoffüberdruck beaufschlagt wird.

7. Verfahren nach einem der vorhergehenden Ansprüche, wobei der Probenahmebehälter zum Abdampfen eventuell vorhandener Flüssigkeiten beheizt wird.

8. Verfahren nach einem der vorhergehenden Ansprüche, wobei das Entspannen und Entgasen des Reaktionsgemisches mit Stickstoff in Abwesenheit von Katalysatorgiften in einer separaten Entspannungseinheit (8) vor dem Probenahmebehälter erfolgt, wobei nach Öffnen des Auslassventils (22) das Reaktionsgemisch in diese separate Entspannungseinheit eingespeist wird.

9. Verfahren nach einem der vorhergehenden Ansprüche, wobei die Dampfphase der Polyolefinpolymer-Zwischenproduktprobe auf das Vorhandensein von Kohlenwasserstoffen gemessen wird.

10. Verfahren nach einem der vorhergehenden Ansprüche, wobei eine Temperaturmessung zum Nachweis flüssiger Kohlenwasserstoffe verwendet wird.

11. Verfahren nach einem der vorhergehenden Ansprüche, wobei das Polyolefinpolymer-Zwischenprodukt ein Polypropylenhomo- oder Polypropylencopolymer ist, wobei bevorzugt das im ersten Reaktor hergestellte Polymer ein Homopolymer ist und das im zweiten Reaktor hergestellte Polymer ebenfalls ein Homopolymer ist,
oder alternativ
wobei das im ersten Reaktor hergestellte Polymer ein statistisches Ethylen-Propylen-Copolymer ist und das im zweiten Reaktor hergestellte Polymer ebenfalls ein statistisches Ethylen-Propylen-Copolymer ist und
wobei optional
das im zweiten Reaktor hergestellte Polymer einem dritten Reaktor zugeführt wird, um ein heterophasisches Copolymer zu erhalten.

12. Verfahren nach einem der vorhergehenden Ansprüche, wobei Ketone, Alkohole, Sauerstoff, Kohlenmonoxid und/oder Wasser nicht in den Probenahmebehälter eingeleitet werden.

13. Verfahren nach einem der vorhergehenden Ansprüche, wobei die Polyolefinpolymer-Zwischenproduktprobe auf eines oder mehreres analysiert wird von:
a) Schmelzindex,
b) rheologische Eigenschaften,
c) Dichte,
d) Kristallinität,
e) Modul,
f) Comonomergehalt,
g) Comonomerverteilung,
h) Crystex-Eigenschaften,
i) in Xylol lösliche Anteile,
j) GPC-Eigenschaften,
k) Schmelz- und Kristallisationstemperaturen,
und wobei
(aa) optional die in einem oder mehreren der Punkte a) bis k) erhaltenen Analysedaten zur Anpassung und Steuerung des Prozesses im ersten Reaktor verwendet werden und/oder
(bb) optional die in einem oder mehreren der Punkte a) bis k) erhaltenen Analysedaten zur Anpassung und Steuerung des Prozesses in einem dem ersten Reaktor vorgeschalteten Reaktor verwendet werden.

14. Verfahren nach einem der vorhergehenden Ansprüche, wobei das Reaktionsgemisch des ersten Reaktors kein Reaktionsgemisch einer Lösungspolymerisation ist.

15. Verfahren nach einem der vorhergehenden Ansprüche, wobei der Katalysator ein Ziegler-Natta-Katalysator ist.

## Revendications

1. Procédé de fourniture d'un échantillon de polymère de polyoléfine intermédiaire à partir d'un premier réacteur de polymérisation de polyoléfine (1) couplé en série à un deuxième réacteur de polymérisation de polyoléfine (2) et étant connecté par un conduit de raccordement (11), le premier réacteur de polymérisation de polyoléfine fonctionnant à moins de 100 °C,
le processus, comprenant les étapes consistant à
a) alimenter une partie du mélange réactionnel incluant un polymère de polyoléfine intermédiaire, des monomères non réagis et optionnellement des comonomères non réagis, un catalyseur, un aluminium contenant du cocatalyseur et optionnellement des donneurs externes à partir du premier réacteur de polymérisation de polyoléfine (1) ou à partir du conduit de raccordement (11) vers un conduit d'échantillonnage, dans lequel
- le conduit d'échantillonnage (12) est défini par une vanne d'entrée (21) et une vanne de sortie (22) et dans lequel
- le conduit d'échantillonnage (12) est raccordé par le biais d'une conduite d'alimentation (14) à un récipient d'échantillonnage (5) ;
en ouvrant la vanne d'entrée (21) et en maintenant la vanne de sortie (22) fermée ; puis en fermant la vanne d'entrée ; et
b) ouvrir la vanne de sortie, alimentant ainsi le mélange réactionnel dans le pot d'échantillonnage par le biais de la conduite d'alimentation (14) ;
c) évaporer et dégazer le mélange réactionnel en l'absence de poisons catalytiques ; optionnellement rincer par azote en l'absence de poisons catalytiques ;
d) ensuite introduire un agent de désactivation non combustible dans le pot d'échantillonnage pour la désactivation du catalyseur dans des conditions telles que l'agent de désactivation incombustible est à l'état de vapeur et dans lequel l'agent de désactivation non combustible est sélectionné parmi le dioxyde de carbone ou un mélange de dioxyde de carbone et d'eau ;
e) alimenter optionnellement des monomères non réagis, présenter optionnellement des comonomères non réagis, des produits de décomposition de catalyseur, de l'aluminium contenant du cocatalyseur et présenter optionnellement des donneurs externes dans des installations de retraitement et/ou d'élimination et
f) fournir un échantillon de polymère de polyoléfine intermédiaire dans le pot d'échantillonnage (5).

2. Procédé selon la revendication 1, dans lequel l'agent de désactivation non combustible est le dioxyde de carbone.

3. Procédé selon la revendication 1 ou 2, dans lequel le premier réacteur est un réacteur en boucle, traité optionnellement par un autre réacteur en boucle et/ou un préréacteur.

4. Procédé selon l'une des revendications précédentes, dans lequel le deuxième réacteur est un réacteur de polymérisation en phase gazeuse.

5. Procédé selon l'une des revendications précédentes, dans lequel un filtre (4) pour empêcher la décharge de poudre de polymère est présent ; et/ou dans lequel des filtres séparés (6,7) sont présents à l'extérieur du pot d'échantillonnage.

6. Procédé selon l'une des revendications précédentes, dans lequel le pot d'échantillonnage est soumis à une pression positive d'azote avant d'alimenter le mélange réactionnel.

7. Procédé selon l'une des revendications précédentes, dans lequel le pot d'échantillonnage est chauffé pour évaporer les liquides potentiellement présents.

8. Procédé selon l'une des revendications précédentes, dans lequel la vaporisation et le dégazage du mélange réactionnel par de l'azote en l'absence de poisons catalytiques sont effectués dans une unité de vaporisation séparée (8) en amont du pot d'échantillonnage, dans lequel lors de l'ouverture de la vanne de sortie (22), le mélange réactionnel est amené dans ladite unité de vaporisation séparée.

9. Procédé selon l'une des revendications précédentes, dans lequel la phase vapeur de l'échantillon de polymère de polyoléfine intermédiaire est mesurée pour la présence d'hydrocarbures.

10. Procédé selon l'une des revendications précédentes, dans lequel la mesure de température est utilisée pour détecter des hydrocarbures liquides.

11. Procédé selon l'une des revendications précédentes, dans lequel le polymère de polyoléfine intermédiaire est un homo- ou copolymère de polypropylène, de préférence dans lequel le polymère produit dans le premier réacteur est un homopolymère et le polymère produit dans le deuxième réacteur est également un homopolymère,
ou en variante,
dans lequel le polymère produit dans le premier réacteur est un copolymère d'éthylène-propylène aléatoire et le polymère produit dans le deuxième réacteur est également un copolymère d'éthylène-propylène aléatoire ; et
dans lequel optionnellement,
le polymère produit dans le deuxième réacteur est soumis à un troisième réacteur pour obtenir un copolymère hétérophasique.

12. Procédé selon l'une des revendications précédentes, dans lequel les cétones, les alcools, l'oxygène, le monoxyde de carbone et/ou l'eau ne sont pas introduits dans le pot d'échantillonnage.

13. Procédé selon l'une des revendications précédentes, dans lequel l'échantillon de polymère de polyoléfine intermédiaire est analysé pour l'un ou plusieurs des éléments suivants
a) débit de fusion ;
b) propriétés rhéologiques ;
c) densité ;
d) cristallinité ;
e) module ;
f) teneur en comonomères ;
g) distribution des comonomères ;
h) propriétés de Crystex ;
i) solubles de xylène ;
j) propriétés des GPC ;
k) températures de fusion et de cristallisation ;
et dans lequel
(aa) optionnellement les données analytiques telles qu'obtenues dans un ou plusieurs des points a) à k) sont utilisées pour adapter et piloter le procédé dans le premier réacteur ; et/ou
(bb) optionnellement les données analytiques telles qu'obtenues dans un ou plusieurs des points a) à k) sont utilisées pour adapter et piloter le procédé dans un réacteur en amont du premier réacteur.

14. Procédé selon l'une des revendications précédentes, dans lequel le mélange réactionnel du premier réacteur n'est pas un mélange réactionnel d'une polymérisation de solution.

15. Procédé selon l'une des revendications précédentes, dans lequel le catalyseur est un catalyseur Ziegler Natta.
